# EUROPEAN PATENT APPLICATION

(11) **EP 2 043 367 A2**
(43) Date of publication of application: **01.04.2009**
(21) Application number: 08008581.4
(22) Date of filing: 07.05.2008
(51) Int. Cl.: H04N 5/76

(54) **Program information display system, program information display method and television system**

(30) Priority: 28.09.2007 JP 2007255738
(71) Applicant: Kabushiki Kaisha Toshiba, Minato-ku Tokyo (JP)
(72) Inventor: Watanabe, Hiromasa, Tokyo (JP); Tsuda, Kunifumi, Tokyo (JP)
(74) Representative: HOFFMANN EITLE

(57) **Abstract**

According to one embodiment, a program information display system includes: a tuner that selects a channel of a received digital broadcast signal and extracts an video signal, a audio signal, and EPG information from the received digital broadcast signal; an acquiring unit that acquires a finish time of a current program of the selected channel from the EPG information; a generator that generates a program information table including program information of each channel at a start time of a program next to the current program from the extracted EPG information; and a provider that provides a superposed video at the finish time of the current program or a certain time before the finish time.

## Description

### BACKGROUND

### 1. Field

One embodiment of the invention relates to a program information display system for forming a program table by using EPG information included in a broadcast signal and automatically displaying the program table at time pertinent for a user.

### 2. Description of the Related Art

In recent years, digitization of television broadcast has been progressed and a television or a DVD recorder for receiving digital broadcast of BS digital broadcast, terrestrial digital broadcast or the like has started to spread generally. A broadcast signal received by such a digital broadcast is multiplexed with EPG (Electronic Program Guide) for forming a program table of programs broadcast by respective channels. A television capable of receiving digital broadcast forms a program table based on EPG information and displays a program table on a screen of LCD, CRT or the like in accordance with instruction from a user by way of a remote controller.

JP-A-2006-237873 shown bellow discloses a television which is a television capable of receiving such a digital broadcast capable of displaying a program table a constant time period before finishing a program currently viewed and reserve a successively viewed program.

According to the television disclosed in JP-A-2006-237873, a program table is displayed in an image of a program which is being viewed by a user at certain time period before finishing the program. Therefore, there is a case in which a currently edited image of the program which is being viewed is partially blocked by the program table. In such an occasion, the user feels unpleasant.

### SUMMARY

According to an aspect of the invention, there is provided a program information display system including: a tuner that selects a channel of a received digital broadcast signal and extracts an video signal, a audio signal, and EPG (Electric Program Guide) information from the received digital broadcast signal; an acquiring unit that acquires a finish time of a current program of the selected channel from the EPG information; a generator that extracts and generates a program information table including program information of each channel at a start time of a program next to the current program from the EPG information; and a provider that provides a superposed video at the finish time of the current program or a certain time before the finish time, the superposed video being superposed with: a shrunk video that is created by shrinking a video of the current program to produce a vacant display area on a display; and the program information table on the vacant display area.
According to another aspect of the invention, there is provides a program information display system including: a tuner that selects a channel of a received digital broadcast signal and extracts an video signal, a audio signal, and EPG (Electric Program Guide) information from the received digital broadcast signal; an acquiring unit that acquires a finish time of a current program of the selected channel from the EPG information; a generator that extracts and generates a program information table including program information of each channel at a start time of a program next to the current program from the EPG information; a provider that provides a superposed video at the finish time of the current program or a certain time before the finish time, the superposed video being superposed with: a shrunk video that is created by shrinking a video of the current program to produce a vacant display area on a display; and the program information table on the vacant display area, and a display that displays the provided superposed video. According to another aspect of the invention, there is provided a program information display method including: selecting a channel of a received digital broadcast signal; extracting an video signal, a audio signal, and EPG (Electric Program Guide) information from the received digital broadcast signal; acquiring a finish time of a current program of the selected channel from the EPG information; extracting and generating a program information table including program information of each channel at a start time of a program next to the current program from the EPG information; and providing a superposed video at the finish time of the current program or a certain time before the finish time, the superposed video being superposed with: a shrunk video that is created by shrinking a video of the current program to produce a vacant display area on a display; and the program information table on the vacant display area.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.
Fig.1 is an exemplary block diagram showing an outline constitution of an embodiment of a television system to which a program information display system according to the invention is applied. Fig.2 is an exemplary flowchart showing a first embodiment of an operation by a control portion 15.
Fig.3 is an exemplary flowchart showing details of step S103 of Fig.2.
Fig.4 is an exemplary view showing an example of a display screen of a program information table displayed.
Fig.5 is an exemplary view showing other example of a display screen of a program information table displayed.
Fig.6 is an exemplary flowchart showing a second embodiment of the operation by the control portion 15.
Fig.7 is an exemplary time chart for explaining a case of displaying a program information table frequently.
Fig.8 is an exemplary flowchart showing a third embodiment of an operation by the control portion 15.
Fig.9 is an exemplary view showing an example of a program information table formed in the third embodiment.

### DETAILED DESCRIPTION

An embodiment of the invention will be explained in reference to the drawings as follows.

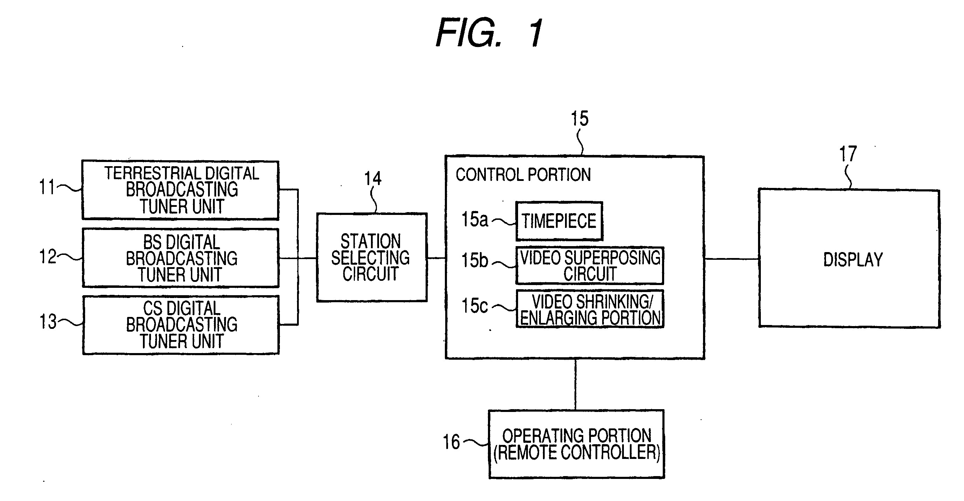

Fig.1 is a block diagram showing an outline constitution of an embodiment of a television system to which a program information display system according to the invention is applied. The invention is applicable also to STB (set top box) or the like having a digital broadcast receiver such as a DVD recorder.

A terrestrial digital broadcasting tuner unit 11 receives Terrestrial Digital Broadcasting and outputs an video signal and a audio signal of the broadcast. A BS digital broadcasting tuner unit 12 receives BS digital broadcast and outputs an image and a audio signal of the broadcast. Similarly, a CS digital broadcasting tuner unit 13 receives CS digital broadcast and outputs an image and a audio signal of the broadcast. A station selecting circuit 14 selects the respective tuner units 11, 12 and 13 and selects which station broadcast is displayed from the respective tuners, that is, selects a station. A control portion 15 includes a timepiece 15a, an image superposing circuit 15b, an image shrinking/expanding portion 15c and the like and processes a signal from a station selected by the selecting circuit 14 by using these. A display portion 17 displays an image based on an video signal processed by the control portion 15. An operating portion 16 is an operation inputting apparatus of a remote controller or the like and is used for carrying out an operation of selecting a function of the system or selecting a station by a user. Further, when the system is STB such as a DVD recorder, the display portion 17 becomes an external display apparatus connected to the system by a cable.

In the television system constituted by a style as shown by Fig.1, the control portion 15 acquires time of finishing a program which is currently viewed and a table of program information.

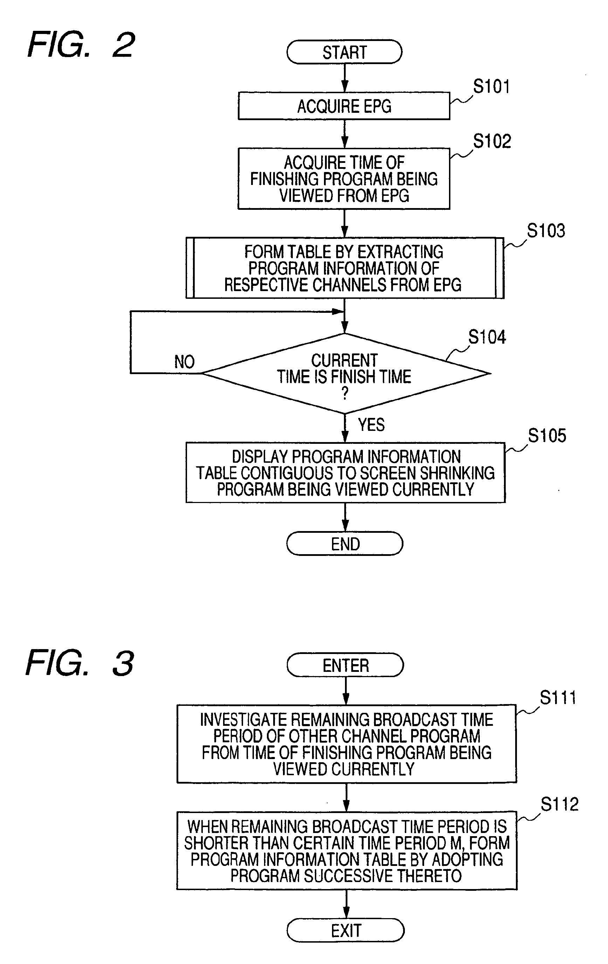

Fig.2 is a flowchart showing a first embodiment of an operation by the control portion 15. The control portion 15 displays time of finishing a program which is being viewed currently and program information as time of determining to display the program information.

First, the control portion 15 extracts, that is, acquires an electronic program guide (EPG) from received broadcast wave (S101). EPG acquired at this occasion may be program information of all of channels of received broadcast wave (for example, terrestrial digital broadcast) and information until several hours from current time, or information until one week. Further, when EPG has been acquired already, the step S101 is not needed. Further, the control portion 15 acquires time of finishing a program which is being currently viewed as well as program information of respective channels displayed on a program information table from acquired EPG (S102, S103).

In the case of the embodiment, the displayed program information table is program information immediately after finishing a program which is being viewed by a user (time of starting next program). The program information includes program information of a channel which has been viewed currently and other channel. For example, in a case in which time of finishing a program which is being viewed is 20 o'clock 55 minute, and there is a program of other channel having finish time of 20 o'clock 55 minute, display of information of the program having the finish time of 20 o'clock 55 minute is not so much meaningful for a user. Therefore, the control portion 15 does not adopt the information of the program which is going to be finished in this way in the program information table.

Fig.3 is a flowchart showing details of step S103, showing an operation of selectively adopting program information of respective programs from EPG mentioned above. As step S111, the control portion 15 investigates a remaining broadcast time period of other channel program from time of finishing a program which is being viewed currently. When the remaining broadcast time period is longer than a certain time period "m", information of the program is adopted as information displayed on the program information table and when the remaining broadcast time period is shorter than the certain value "m", the program information table is formed by adopting program information of a program successive thereto (S112).

Referring back to the explanation of Fig.2, the control portion 15 compares the time of finishing the program which is being viewed currently and current time in reference to the timepiece 15a and determines whether the program information is to be displayed on the display screen (S104). When the current time has arrived at the finishing time (Yes of S104), the control portion 15 displays an image the program information table formed at step S103 to be contiguous to a program image which is shrunk on the display portion 17 (S105).

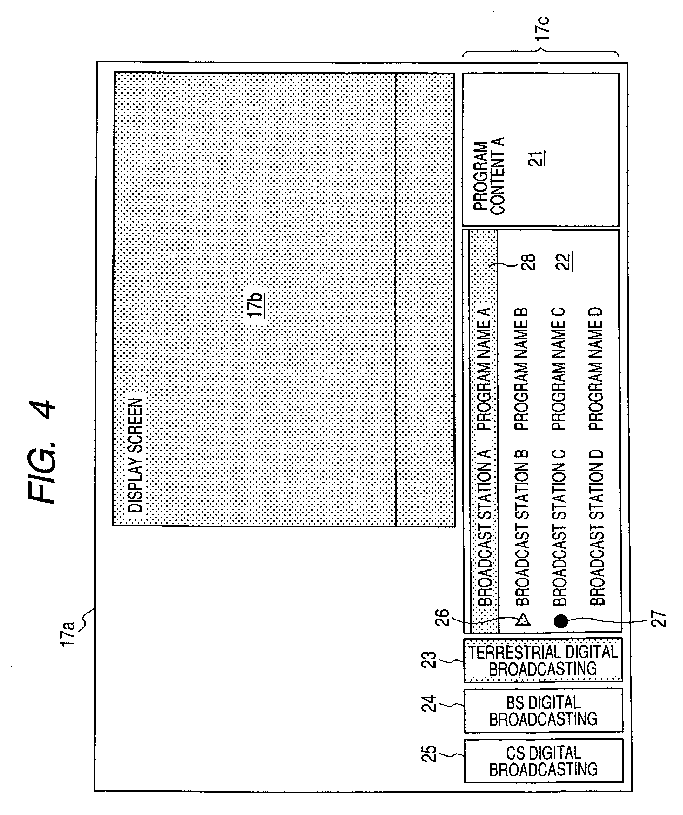

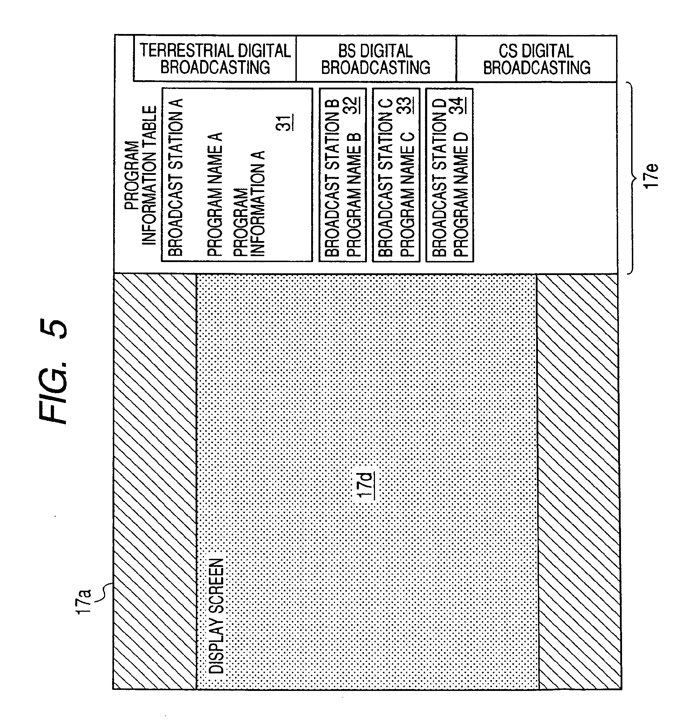

Fig.4 and Fig.5 show examples of display screens of program information tables displayed by a processing at step S105. The program information is displayed contiguous to a display screen of a program image which is being viewed by a simplified style of an electronic program table. The image shrinking/extracting portion 15c contracts the display screen of the program image, and the image superposing circuit 15b displays the program table at a vacant area. In this way, the display of the program information is carried out so as not to hinder the broadcast program of the user from being viewed.

In a case of a display example of a program information table shown in Fig.4, a program image displayed on a total display area 17a of the display portion 17 is shrunk as in an image display screen 17b, and a vacant area produced thereby is used as a program information display area 17c. In this case, although the image display screen 17b may be constituted by a screen shrunk only in a vertical direction, in that case, an image is warped, and therefore, according to the embodiment, an aspect ratio thereof is not changed.

When the program information table is displayed at time of finishing the program as in the embodiment, current detailed program information (information of a program successive to a program which is being viewed) of a channel (broadcast station) which is being viewed currently is displayed in a display frame 21 in the display area 17c. A display frame 22 in the display area 17c is an area for displaying simplified program information of a channel which is being viewed currently and other channel (first program names of respective channels).

Display frames 23 through 25 show receivable kinds of broadcast waves. In the case of Fig.4, program information displayed in the display frames 21 and 22 are program information of terrestrial digital broadcasting. When displayed program information is increased by presence of a plurality of kinds of broadcast waves which is receivable, as in the display frames 23 through 25, broadcast kinds (terrestrial digital broadcasting, BS digital broadcasting, CS digital broadcasting and the like) are displayed on a side of the program information display frame 22. By selecting any of the display frames 23 through 25, the program information is displayed for the respective broadcast kinds.

As shown by icons 26 and 27 of Fig.4, when a viewing reservation (icon 26) or a recording reservation (icon 27) has already been carried out in displaying program information, by displaying images in forms respectively different from each other, a receiving reservation of a program, that is, a state of a viewing reservation or a recording reservation of the program is informed visually to a user.

In a case of a display example of a program information table shown in Fig.5, a program image is shrunk as in an image display screen 17d, and a vacant area produced thereby is used as a program information display area 17e. Program detailed information of the same channel broadcast successive to a program which is being viewed is displayed in a display frame 31. Display frames 32, 33 and 34 smaller than the display frame 31 are simplified program information of other channels. In this case, broadcast kinds (terrestrial digital broadcasting, BS digital broadcasting, CS digital broadcasting and the like) are displayed at a right end of the program information display area 17e, and by selecting any thereof, the program information is displayed for respective broadcast kinds.

As shown by Figs.4 and 5, the program information table displays a channel which is being displayed currently at the display portion 17 as an initially selected state to details of the channel and displays only station names and program names of other channels. Further, when there are a plurality of kinds of broadcast waves which is receivable such as terrestrial digital broadcasting, BS digital broadcasting, CS digital broadcasting and the like, the program information is displayed for respective broadcast kinds by displaying the broadcast kinds on a side of the program information and selecting the broadcast kinds.

A user is selectable a desired program by using a broadcast kind selecting button, a direct station selecting button, a channel up/down key, or a cursor key and a determination key of the remote controller 16 in reference to the program information table as in Fig.4 or Fig.5.

As has been explained above, according to the first embodiment of the invention, when the program which is being viewed is finished, the image screen of the program is shrunk, and detailed information of the program broadcast by the channel which is being viewed and simplified program information of other channel are displayed. By carrying out such a simplified program display, a geometrical area of an area for displaying the program information table may be constituted to be small, and a geometrical area of the program image display screen 17b or 17d at inside of the display screen 17a is constituted to be large. Further, information of a program having a time period until time of finishing to broadcast program shorter than a certain time period in the simplified program information of other channel is dispensed with, and only information of a program successive thereto is displayed. Therefore, a pertinent program information table is displayed without hindering a program image of a user from being viewed.

Next, a second embodiment of the invention will be explained.

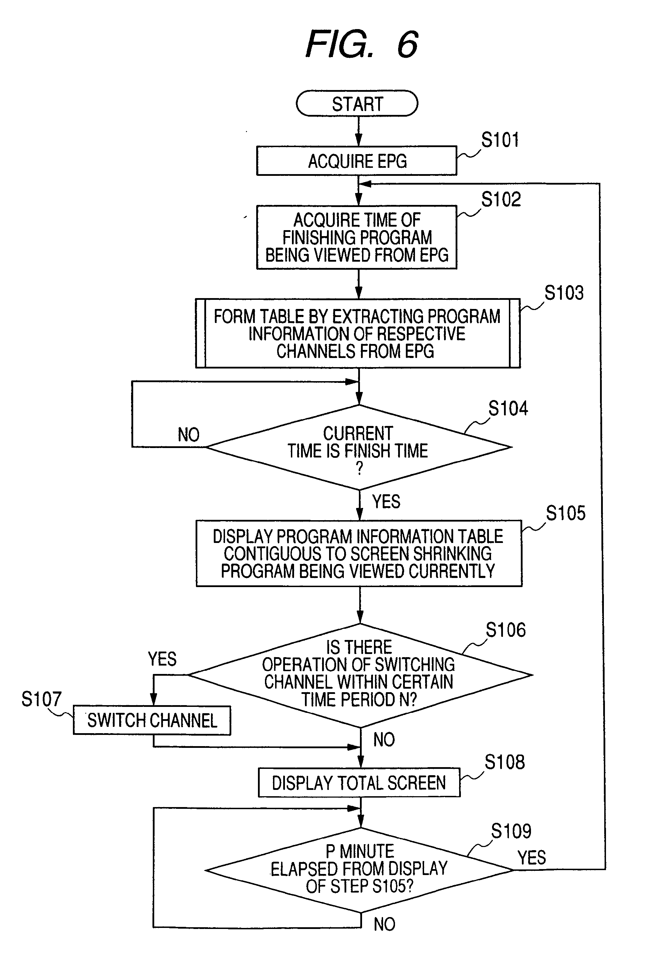

Fig.6 is a flowchart showing a second embodiment of an operation related to the control portion 15. The second embodiment includes an operation of switching a channel and an operation of finishing to display a program information table based on the displayed program information table in addition to the operation of the first embodiment. Steps S101 through S105 are similar to those of the first embodiment, and therefore, a detailed explanation thereof will be dispensed with.

When an operation of switching a channel is not inputted within a certain time period "n" since the program information table has been displayed as in step S105 (No of S106), the control portion 15 erases the program information table, enlarges the program image to be displayed by using a total display area of the display portion 17 by using the image shrinking/expanding portion 15c to display the program image by the total screen (S108). When a program which is a user intends to view is selected from the program information table displayed on the display portion 17 (Yes of S106), the control portion 15 switches the display to the corresponding channel (S107).

Here, an explanation will be given as follows of an operation when the program is selected by using a cursor key (up and down and left and right moving key) of the remote controller in reference to the program information table screen, for example, as in Fig.4. When the up/down moving key of the cursor is depressed, the cursor 28 in the program information table is moved, and when the cursor 28 reaches the topmost or the bottommost portion and the up/down moving key of the cursor is further depressed similarly, the program table is scrolled and a program name of other channel is displayed. By enabling the program information table to scroll in this way, a geometrical area occupied by the program information table is reduced. The display frame 21 displays detailed information of a program at which the cursor 28 is disposed. Further, when the left/right moving key of the cursor is depressed, the broadcast waves 23 through 25 received are changed, and also contents of the display frames 21 and 22 are changed in accordance with the change. When the determination key is displayed, the display is switched to a channel at which the cursor 28 is disposed at that occasion.

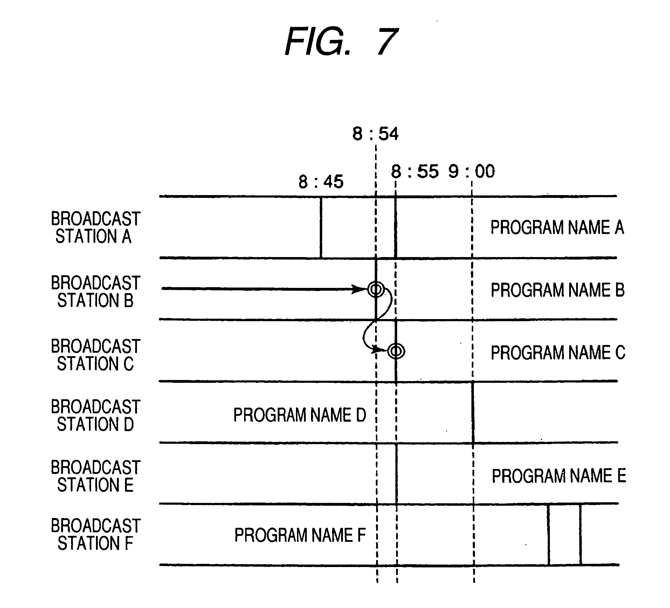

When the program information table is displayed at time of finishing a program as described above, depending on cases, there is a case of frequently displaying the program information table. Fig.7 is a time chart for explaining such a case. In the drawing, a double circle indicates time of starting to display the program information table.

For example, when a user views a program of a broadcast station (channel) B to last thereof, a program information table as shown by Fig.4 or Fig.5 is displayed on the display portion 17 from 8 o'clock 54 minute. When the certain time period "m" of step S112 of Fig.3 is set to, for example, 2 minutes, program names displayed on the table are program names A through F, and program name C designates a program starting from 8:55. When the user switches a broadcast station to broadcast station C by viewing the program information table, a similar program information table is displayed on the display portion 17 at 8:55 again. The display of the table an unnecessary or troublesome display for a user. Therefore, according to the embodiment, as in step S109, when the program information table is displayed once at step S105 (step S105), "p" minute (for example, 10 minutes) thereafter, an operation of displaying the program information table is made to be ineffective, that is, the program image is not shrunk and the program information table is not displayed.

When p minutes has elapsed after displaying the program information table once, the flow returns to step S102, and the above-described processings (S102 through S109) are repeated to be processed.

Next, a third embodiment of the invention will be explained.

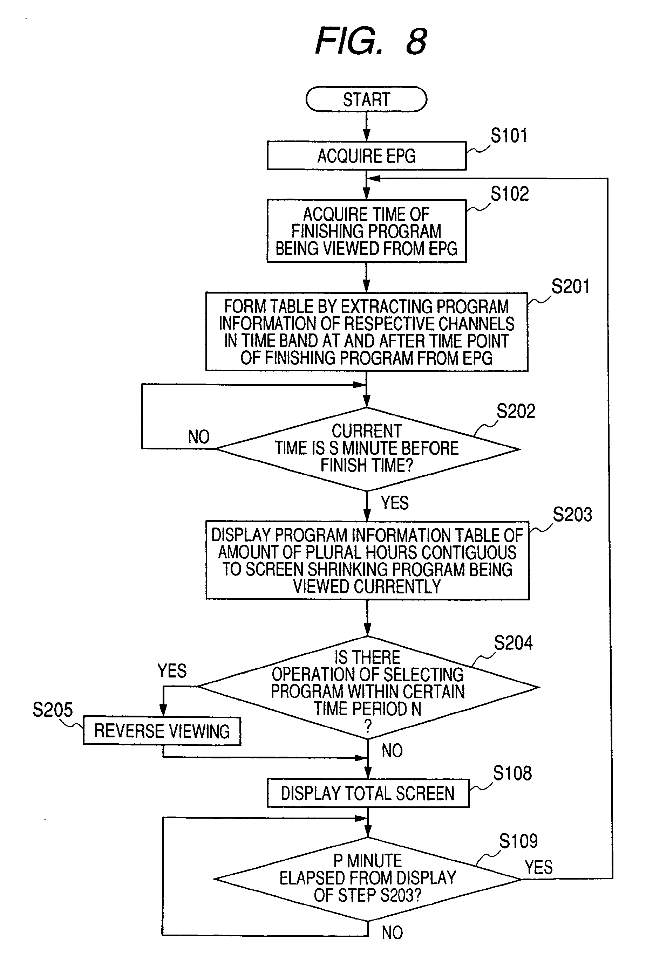

Fig.8 is a flowchart showing a third embodiment of an operation by the control portion 15. According to the third embodiment, steps S103 through S107 of the second embodiment of Fig.6 are changed to steps S201 through S204 and other steps are similar to those of the second embodiment.
According to the third embodiment, "s" minute before finishing the program which is being viewed, a program information table of an amount of several hours from the finished time is displayed, and when a certain program is selected from the table, the program is reserved to be viewed.

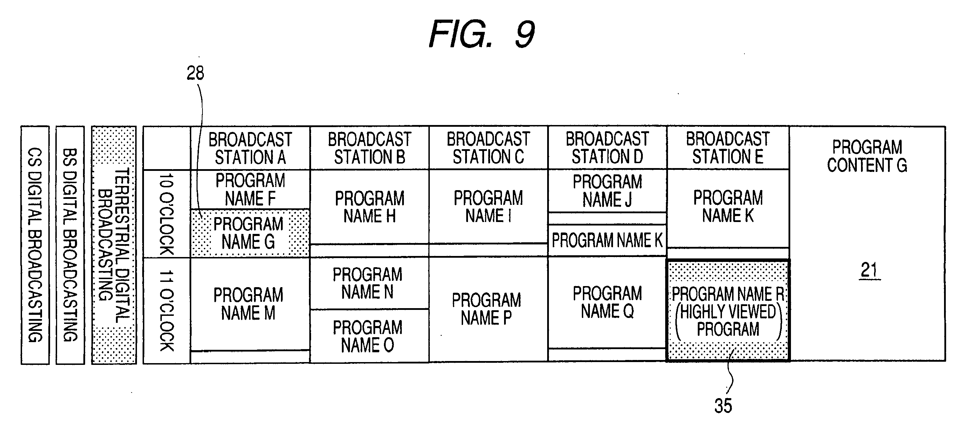

That is, at step S201, the control portion 15 extracts an amount of a plurality of hours of program information of respective channels in "a time band at and after a time point of finishing a program which is being viewed currently" from EPG and forms a program information table. Fig.9 shows an example of a program information table formed in this way and a program information table of a time band (10 o'clock time and 11 o'clock time) at and after a time point of finishing a program (program name F) which is being viewed currently.

When current time arrives at s minute before time of finishing a program which is being viewed currently (Yes of S202), the control portion displays the program information table formed at step S201 on a screen which is being viewed currently (S203). For example, assume that s minute of step S202 is set to 3 minute and a user views a program (program name F) of a broadcast station A to last thereof (10:20) as shown by Fig.9. In this case, a display screen of a program image is shrunk as designated by notation 17b of Fig.4 at 10:17, and the program information table as shown by Fig.9 is displayed on a lower side of the display screen 17b.

In Fig.9, a program indicated by the cursor 28 shows a program (program name G) of the same channel to be broadcast successive to the program (program name F) which is being viewed currently. The display frame 21 at a right end thereof shows a detailed content of the program indicated by the cursor (program name G in Fig.9). When a specific program is selected by using a cursor moving key and a determination key (Yes of step S204), the program is reserved to be viewed (step S205). Also in this case, the program information table is scrolled in an up and down and a left and right direction in accordance with the cursor operation. When a program is reserved to be viewed, an image as shown by the icon 26 of Fig.4 is attached to inside of the display frame of the program (not illustrated). When time of starting to broadcast the program reserved to be viewed has arrived, the program is selected by the station selecting circuit 14 and is displayed on the display portion 17.

Further, a program (program name R) of a display frame 35 indicated by a bold line frame of Fig.9 is a program having a large number of times of being viewed in the past. In this way, the control portion 15 is stored with a number of times of viewing a program which is viewed by a certain time period (for example, 10 minutes) or longer and displays, for example, a program having a number of times of being viewed larger than a threshold number of times in recent several months in the program information table as in the display frame 35 of Fig.9. Thereby, a user does not oversight a program which is viewed always.

According to the invention, a user is provided with program information at time at a vicinity of time of finishing a program, and therefore, an effective guidance to a next program to be viewed is achieved. The user acquires a program information table and selects a station without carrying out a special operation at time of finishing to view a program and without hindering the user from viewing the program. Therefore, anyone is usable a television system easily and pleasantly.

The above-described explanation is the embodiments of the invention and does not limit an apparatus and a method of the invention but various modified examples is easily embodied. For example, a function of forming and displaying the program information table by acquiring the time of finishing the program as described above may be made to be ON/OFF by setting of a user. Further, the certain time periods m, n, p and s may be made to be able to be changed by setting of the user. Further, a width of a time band displayed as a program information as in the third embodiment may be made to be able to be changed by setting of a user.

## Claims

1. A program information display system comprising:
a tuner that selects a channel of a received digital broadcast signal and extracts an video signal, a audio signal, and EPG (Electric Program Guide) information from the received digital broadcast signal;
an acquiring unit that acquires a finish time of a current program of the selected channel from the EPG information;
a generator that extracts and generates a program information table including program information of each channel at a start time of a program next to the current program from the EPG information; and
a provider that provides a superposed video at the finish time of the current program or a certain time before the finish time, the superposed video being superposed with:
a shrunk video that is created by shrinking a video of the current program to produce a vacant display area on a display; and
the program information table on the vacant display area.

2. The program information display system according to claim 1, wherein the generator generates a simple program information table including a program name of each channel and a name of each channel except the selected channel, and
wherein the generator generates a detailed program information table including more detailed information than the simple program information table.

3. The program information display system according to claim 1, wherein, when a next program is selected by using the program information table that is displayed on the display at the finish time of the current program, the tuner selects a channel corresponding to the next program, and
wherein, when a next program is selected by using the program information table that is displayed on the display at the certain time before the finish time of the current program, the tuner selects a channel corresponding to the next program after the finish time.

4. The program information display system according to claim 1, wherein the tuner conforms to a plurality of broadcasts including Terrestrial Digital Broadcasting and BS digital broadcasting,
wherein the generator generates the program information table including items corresponding to each kind of the broadcasts and program information corresponding to each kind of the broadcasts.

5. The program information display system according to claim 1, wherein, when the program information table includes program information indicating that a program is reserved, the generator mark up the program information of the reserved program.

6. The program information display system according to claim 1, wherein the provider stops providing the program information table and provides non-shrunk video instead of the shrunk video when an operation of selecting the program is not operated for a certain time period during the program information table is displayed on the display.

7. The program information display system according to claim 1 further comprising: an output controller that controls whether or not the superposed video is output to the display.

8. The program information display system according to claim 1, wherein the generator calculates a remaining time period of current program from the finish time; and
wherein, when the remaining time period is shorter than a certain period, the program information table is generated by using program information of a program next to the current program.

9. The program information display system according to claim 1 further comprising: an output controller that cuts off an outputting the superposed video to the display in certain period after the superposed video is displayed on the display.

10. The program information display system according to claim 1, further comprising: a memory that stores respective numbers of viewing times of each program in a given period; and
wherein, when a certain program has a number of viewing times that is equal or larger than a threshold number of times in the program information table, the generator marks up a program information corresponding to the certain program.

11. A program information display system comprising:
a tuner that selects a channel of a received digital broadcast signal and extracts an video signal, a audio signal, and EPG (Electric Program Guide) information from the received digital broadcast signal;
an acquiring unit that acquires a finish time of a current program of the selected channel from the EPG information;
a generator that extracts and generates a program information table including program information of each channel at a start time of a program next to the current program from the EPG information;
a provider that provides a superposed video at the finish time of the current program or a certain time before the finish time, the superposed video being superposed with:
a shrunk video that is created by shrinking a video of the current program to produce a vacant display area on a display; and
the program information table on the vacant display area, and
a display that displays the provided superposed video.

12. A program information display method comprising:
selecting a channel of a received digital broadcast signal;
extracting an video signal, a audio signal, and EPG (Electric Program Guide) information from the received digital broadcast signal;
acquiring a finish time of a current program of the selected channel from the EPG information;
extracting and generating a program information table including program information of each channel at a start time of a program next to the current program from the EPG information; and
providing a superposed video at the finish time of the current program or a certain time before the finish time, the superposed video being superposed with:
a shrunk video that is created by shrinking a video of the current program to produce a vacant display area on a display; and
the program information table on the vacant display area.
